# EUROPÄISCHE PATENTSCHRIFT

(11) **EP 3 423 742 B1**
(45) Veröffentlichungstag und Bekanntmachung des Hinweises auf die Patenterteilung: **04.01.2023**
(21) Anmeldenummer: 17705128.1
(22) Anmeldetag: 14.02.2017
(51) Int. Cl.: F16L 23/00, F16L 23/08

(54) **PROFILSCHELLE**
PROFILED CLAMP
COLLIER PROFILÉ

(30) Priorität: 02.03.2016 DE 102016103703
(43) Veröffentlichungstag der Anmeldung: 09.01.2019
(73) Patentinhaber: NORMA Germany GmbH, 63477 Maintal (DE)
(72) Erfinder: LENZ, Michael, 61137 Schöneck (DE); BENNAI, Yassine, 91270 Vigneux Sur Seine (FR); SOMMER, Michael, 63654 Büdingen (DE); LANGE, Frank, 63654 Büdingen (DE)
(74) Vertreter: Patentanwälte Olbricht Buchhold Keulertz
(86) Internationale Anmeldenummer: PCT/EP2017/053329
(87) Internationale Veröffentlichungsnummer: WO 2017/148699

(56) Entgegenhaltungen:
- WO-A1-2016/202478
- DE-A1-102011 117 753
- DE-C1- 3 520 952
- DE-U1-202013 001 224
- GB-A- 785 310
- JP-A- 2001 141 154
- JP-A- 2006 083 902

## Beschreibung

Die vorliegende Erfindung betrifft eine Profilschelle zum Verbinden zweier Rohrenden, die eine erste Halbschale und eine zweite Halbschale aufweist, wobei die erste und zweite Halbschale die jeweils an einem ersten Ende einen Spannkopf und an einem zweiten Ende eine Verbindungsgeometrie zum lösbaren Verbinden der zweiten Enden aufweist, wobei die Spannköpfe mit einem Spannelement verbunden sind und wenigstens eine der beiden Halbschalen gegenüber dem Spannelement verkippbar ist, wobei ein Federelement im Bereich der Spannköpfe angeordnet ist, das die zweiten Enden der Halbschalen unter Vorspannung auseinanderdrückt, wobei beim Verbinden der zweiten Enden Anlagebereiche des Federelements reibschlüssig an die Rohrenden anlegbar sind, wobei das Federelement zwei Schenkel aufweist, die an der jeweiligen Innenseite der Halbschalen und anliegen, wobei zwischen den beiden Schenkeln eine V-förmige Ausformung ausgebildet ist, in der Öffnungen eingeformt sind, durch die sich das Spannelement hindurch erstreckt, so dass das Federelement am Spannelement gehalten ist.

### STAND DER TECHNIK

Profilschellen dienen in der Regel zum Verbinden zweier Rohrenden, wobei sie auf Flansche an den Rohrenden aufgesetzt werden. Beim Spannen der Profilschellen wird dann nicht nur eine radiale Haltekraft erzeugt, sondern durch das Profil des Schellenbandes und der Flansche auch eine axiale Kraft, die die Rohrenden aufeinander zu drückt.

Um die Profilschelle einfacher auf den Rohrenden montieren zu können, ist es bekannt, das Schellenband in Form von zwei Halbschalen auszubilden, die jeweils an ihren ersten Enden über eine Spanneinrichtung und an ihren jeweils zweiten Enden über eine lösbare Verbindungsgeometrie verbunden werden. Die Profilschelle wird dann mit geöffneter Verbindungsgeometrie und entspannter Spanneinrichtung auf die Rohrenden bzw. Flansche aufgesetzt und die Verbindungsgeometrie anschließend geschlossen. Danach kann dann durch Betätigung der Spanneinrichtung die Profilschelle durch Reduzierung ihres Durchmessers gespannt werden.

Aus der DE 10 2011 117 753 A1 ist nun eine Profilschelle zur Anordnung an einem Flansch bekannt, die eine erste Halbschale und eine zweite Halbschale aufweist. Die Halbschalen weisen jeweils an einem ersten Ende einen Spannkopf und an einem gegenüberliegenden zweiten Ende eine Verbindungsgeometrie zum lösbaren Verbinden der zweiten Enden auf. Die Spannköpfe sind dabei mit einem Spannelement verbunden, wobei wenigstens eine der beiden Halbschalen gegenüber dem Spannelement verkippbar ist. Dabei ist ein Federelement mit zwei Schenkeln vorgesehen und so am Spannelement aufgenommen, dass jeweils ein Schenkel unter Vorspannung an einer jeweiligen Innenseite der Halbschalen federvorgespannt anliegt. Dadurch wird ein einfacheres Setzen der Profilschelle erreicht, da die durch das Federelement Profilschelle im geöffneten Zustand gehalten wird, bis die Verbindungsgeometrien miteinander verbunden sind.

Das Spannelement ist z.B. mit dem Spannkopf der ersten Halbschale relativ fest verbunden, beispielsweise indem das Spannelement als Schraubelement ausgeführt ist und in ein Gewinde im ersten Spannkopf teilweise eingeschraubt ist. Das Spannelement erstreckt sich durch ein Durchgangsloch, das insbesondere als Langloch ausgebildet ist, das im Spannkopf der zweiten Halbschale eingebracht ist. Mittels der Aufnahme der zweiten Halbschale am Spannelement über ein Durchgangsloch bzw. Langloch ist die zweite Halbschale gegenüber der ersten Halbschale beweglich am Spannelement aufgenommen, während das Spannelement im ersten Spannkopf zum Beispiel teilweise eingeschraubt ist. Das Federelement sorgt dann dafür, dass die beiden Halbschalen in einer Öffnungsposition zueinander gehalten werden, so dass die beiden Verbindungsgeometrien an den jeweils zweiten Enden der Halbschalen geöffnet und möglichst weit voneinander entfernt sind. Damit ergibt sich die Möglichkeit, die Profilschelle auf einfache Weise am Flansch anzuordnen, ohne dass die beiden Halbschalen eine undefinierte Anordnung zueinander aufweisen. Wird das Spannelement in Form einer Schraube weiter in den ersten Spannkopf eingeschraubt, so wird nach einem Verbinden, insbesondere Verrasten der beiden Verbindungsgeometrien an den zweiten Enden der Halbschalen die Profilschelle am Flansch verspannt.

Wird die Profilschelle mit verbundenen Verbindungsgeometrien an den zweiten Enden der Halbschalen vorpositioniert am Flansch gehalten, so kann anschließend ein Monteur das Spannelement betätigen, beispielsweise indem es im Falle einer Schraube in das Gewinde im ersten Spannkopf eingeschraubt wird. Nachteilhafterweise ist dabei die Position der Profilschelle nicht definiert am Flansch positioniert, so dass sich beispielsweise die Profilschelle frei um den Flansch herum drehen kann.

### OFFENBARUNG DER ERFINDUNG

Aufgabe der Erfindung ist die Weiterbildung einer Profilschelle zur vereinfachten Anordnung auf Rohrenden bzw. Flanschen. Insbesondere soll die Profilschelle nach dem Verbinden der zweiten Enden der Halbschalen und vor dem Verspannen der Spannköpfe mit dem Spannelement auf einfache Weise auf den Rohrenden vorfixiert werden können. Diese Aufgabe wird ausgehend von einer Profilschelle gemäß dem Oberbegriff des Anspruches 1 mit den jeweils kennzeichnenden Merkmalen gelöst. Vorteilhafte Weiterbildungen der Erfindung sind in den abhängigen Ansprüchen angegeben.

Die Erfindung sieht zur Lösung dieser Aufgabe vor, dass die Profilschelle ausgehend vom Oberbegriff des Anspruches 1 derart weitergebildet wird, dass die Anlagebereiche in und an abgewinkelten Endbereichen der Schenkel ausgebildet sind.

Kern der Erfindung ist somit eine Funktionserweiterung des Federelementes, welches zur Erfüllung einer ersten Funktion gegen die Innenseiten der Halbschalen federvorgespannt anliegt, um die Halbschalen im nicht verbundenen Zustand der zweiten Enden auseinander zu drücken. Zur Erfüllung einer zweiten Funktion, nämlich einem definierten Vorpositionieren der Profilschelle an den Rohrenden, werden Anlagebereiche, die insbesondere an einer radialen Innenseite des Federelements ausgebildet sind, federnd an die Rohrenden angedrückt, um so einen reibschlüssigen Halt zu erzielen. Durch Verbinden der zweiten Enden werden dabei die Anlagebereiche radial nach innen verformt und legen sich an die Rohrenden an, wobei sich das Federelement dann mit zunehmenden Spannen der Profilschelle mehr und mehr an die Rohrenden anlegen kann. Die zum Spannen der Profilschelle erforderlichen Kräfte steigen dadurch nur unwesentlich an.

Das Federelement weist zwei Schenkel auf und kann so am Spannelement befestigt werden, dass jeweils ein Schenkel unter Vorspannung an einer jeweiligen Innenseite der Halbschalen federgespannt anliegt. An jedem Schenkel ist mindestens einer der Anlagebereiche ausgebildet, mit denen beim Verbinden der zweiten Enden der Halbschalen ein reibschlüssiger Halt der Profilschelle an den Rohrenden bewirkbar ist. Damit wird ein einfacher Aufbau des Federelements mit einer sicheren Vorpositionierung der Profilschelle an den Rohrenden erreicht. Die Anlageberieche an den Schenkeln des Federelementes gehen dabei mit dem Flansch eine Wirkverbindung derart ein, dass ein reibschlüssiger bzw. kraftschlüssiger Halt erreicht wird. Insbesondere wird durch die Wirkverbindung erreicht, dass sich die Profilschelle auf dem Flansch nicht mehr ohne weiteres verdrehen kann, wenn die zweiten Enden der Halbschalen über die Verbindungsgeometrien miteinander verbunden sind, auch wenn die Spannköpfe der Halbschalen mit dem Spannelement noch nicht miteinander verspannt sind. Dadurch ergibt sich eine erhebliche Erleichterung der Montage der Profilschelle, vor allem in schlecht zugänglichen Bereichen.

Die Anlagebereiche sind an abgewinkelten Endbereichen der Schenkel ausgebildet. Beispielsweise erstrecken sich die Endbereiche zu den Schenkeln unter einem Winkel von 90° bis 180° und bevorzugt von 100°. Vorzugsweise bilden die abgewinkelten Endbereiche Anformungen nach der Art kleiner endseitiger Arme, wobei durch die abgewinkelte Erstreckungsrichtung der Endbereiche diese zwischen der Innenseite der Halbschalen und dem Außenumfang der Rohrenden unter elastischer Verformung verspannen können.

Eine weitere Verbesserung wird erreicht, wenn die Anlagebereiche an einer Umbiegung der Endbereiche ausgebildet sind. Die Anlagebereiche drücken dadurch in etwa in Form einer Linienberührung gegen die Rohrenden. Durch die Umbiegungen, beispielsweise in Form einer endseitigen Lasche, ergibt sich so eine definierte Kontaktstelle und eine relativ hohe Kontaktkraft. Insbesondere wird ein Kontakt über einen randseitigen Stanzgrad oder dergleichen vermieden.

Gemäß einer weiterführenden Ausbildungsform der Profilschelle weisen wenigstens die Anlagebereiche eine Beschichtung der Oberfläche auf, mit der die Reibung zwischen den Anlagebereichen und den Rohrenden vergrößerbar ist. Insbesondere kann das Federelement vollständig oberflächenbeschichtet sein, wobei speziell zur Beeinflussung der Reibung zwischen dem Federelement und den Rohrenden eine Beschichtung im Bereich der Anlagebereiche endseitig an den Schenkeln vorteilhaft ist.

Beispielsweise ist das Federelement aus einem Federstahlblech mittels Stanz-Biegeverfahren hergestellt. Das Federelement weist beispielsweise eine Blechdicke von 0,2 mm bis 1 mm und bevorzugt von 0,4 mm auf. Insbesondere weist das Federelement bevorzugt eine Dicke von 0,3 mm bis 0,6 mm auf. Das Federelement ist so ausgebildet, dass Verformungen der Schenkel des Federelementes vorwiegend im elastischen Bereich erfolgen, wobei eine plastische Verformung insbesondere der Anlagebereiche nach einem endgültigen Festziehen der Profilschelle auf den Rohrenden tolerierbar ist. Eine wiederholte Montage der Profilschelle mit einer vorpositionierenden Wirkung des Federelementes kann trotz einer möglicherweise auftretenden leichten plastischen Verformung des Federelementes erhalten bleiben.

Zur Durchführung des Spannelements weist das Federelement zwischen den Schenkeln eine V-förmige Ausformung auf, in der miteinander fluchtende Öffnungen ausgebildet sind, durch die sich das Spannelement hindurch erstreckt. Dabei kann das Federelement insbesondere zur V-förmigen Ausformung mit den Schenkeln und den endseitigen Anformungen symmetrisch ausgeführt sein.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigen:
- Figur 1: eine Seitenansicht einer Profilschelle mit geöffneten Halbschalen, wobei in der gezeigten Öffnungsposition die Halbschalen durch ein Federelement vorgespannt sind,
- Figur 2: eine Ansicht der Profilschelle mit miteinander verbundenen zweiten Enden der Halbschalen, ohne dass die Spannköpfe mit dem Spannelement verspannt sind,
- Figur 3: eine Ansicht der Profilschelle in Anordnung auf einem Flansch gemäß Figur 2, wobei die Spannköpfe mit dem Spannelement verspannt sind, und
- Figur 4: eine Profilansicht des Federelementes zur Anordnung an einer Profilschelle gemäß Figur 1.

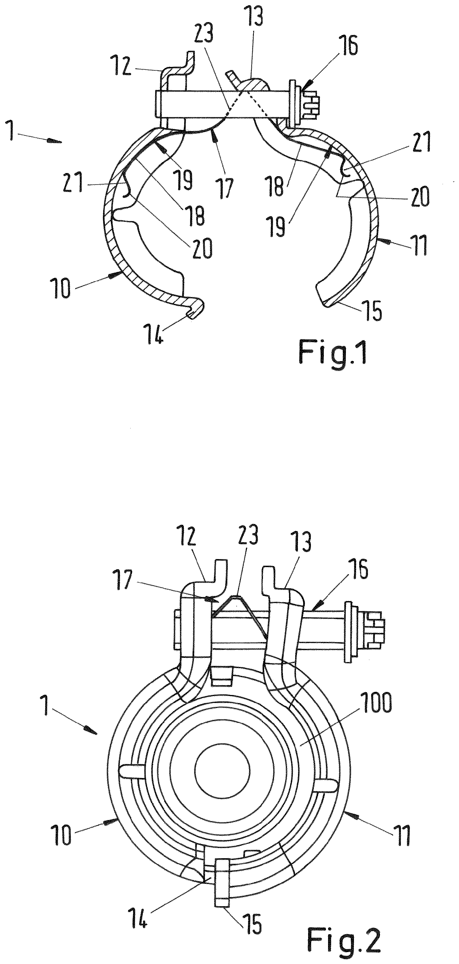

In Figur 1 ist eine Profilschelle 1 dargestellt, die zwei Halbschalen 10, 11 aufweist. Die Profilschelle 1 bzw. ihr Schellenband ist also sozusagen zweiteilig ausgebildet. Die Halbschalen 10 und 11 weisen an einem ersten Ende jeweils einen Spannkopf 12, 13 auf, die über ein Spannelement 16 miteinander verbunden sind. An einem zweiten, gegenüberliegenden Ende weisen die Halbschalen 10, 11 jeweils eine Verbindungsgeometrie 14, 15 auf.

Am Spannelement 16 ist ein Federelement 17 derartig befestigt, dass es an den Innenseiten 19 der Halbschalen 10, 11 der Profilschelle 1 anliegt. Dabei ist das Federelement 17 so vorgespannt, dass die zweiten Enden der Halbschalen 10, 11 mit den Verbindungsgeometrien 14, 15 voneinander weg gedrückt werden und die Profilschelle 1 somit geöffnet wird. Die Profilschelle 1 wird durch das Federelement 17 also in einer geöffneten Stellung gehalten und kann so einfach positioniert werden, wobei die Lage der Halbschalen 10, 11 und des Spannelements 16 zueinander eindeutig definiert sind. Das Spannelement 16 kann dabei in ein Gewinde im Spannkopf 12 eingeschraubt sein, so dass das Spannelement 16 im Wesentlichen starr an der ersten Halbschale 10 angeordnet ist. Die zweite Halbschale 11 kann zur Verkippung entsprechend am Spannelement 16 verkippt werden, wofür im Spannkopf 13 der zweiten Halbschale 11 ein Langloch eingebracht ist.

Das Federelement 17 ist in Form einer Blattfeder ausgebildet und umfasst ein Federstahlblech, das z.B. in einem Stanz-Biegeverfahren hergestellt ist. Als Spannelement 16 findet eine Spannschraube Verwendung, die den zweiten Spannkopf 13 durchläuft und im ersten Spannkopf 12 eingeschraubt ist. Bei einem weiteren Einschrauben der Spannschraube 16 werden die beiden Spannköpfe 12 und 13 so aufeinander zugezogen, dass nach einem vorangegangenen Schließen der beiden Verbindungsgeometrien 14 und 15 an den zweiten Enden der Halbschalen 10 und 11 ein Spannen der Profilschelle 1 erfolgt. Hierfür ist die Verbindungsgeometrie 14 hakenartig ausgebildet, und die Verbindungsgeometrie 15 weist eine lochartige Öffnung auf, in die die hakenartige Ausbildung der ersten Verbindungsgeometrie 14 einhakbar ist.

Das Federelement 17 weist zwei Schenkel 18 auf, die an der jeweiligen Innenseite 19 der Halbschalen 10 und 11 anliegen. Zwischen den beiden Schenkeln 18 ist eine V-förmige Ausformung 23 ausgebildet, in der Öffnungen eingeformt sind, durch die sich das Spannelement 16 hindurch erstreckt, so dass das Federelement 17 am Spannelement 16 gehalten ist. Seitlich zu der V-förmigen Ausformung 23 erstrecken sich die Schenkel 18 etwa 180° voneinander weg, die unter Vorspannung gegen die Innenseiten 19 der Halbschalen 10, 11 anliegen. In Endbereichen 21 der Schenkel 18 sind Anlagebereiche 20 ausgebildet. Die Endbereiche 21 weisen zunächst unter einem Winkel radial nach innen und heben sich somit von der Innenseite 19 der Halbschalen 10, 11 ab.

Die Endbereiche 21 bilden dabei abgewinkelte Fortsätze in Form von Federzungen. Wird die Profilschelle 1 an einem Flansch angeordnet, so gelangen die Anlagebereiche 20 gegen die innen einliegende Außenseite der Rohrenden und können eine Verspannung der Halbschalen 10, 11 an den Rohrenden bewirken, auch wenn die beiden Spannköpfe 12, 13 bei miteinander verbundenen Verbindungsgeometrien 14, 15 noch nicht mit dem Spannelement 16 verspannt sind. Daraus ergibt sich erfindungsgemäß eine reibschlüssige Befestigung der Profilschelle 1 auf einem Flansch, wie in der folgenden Figur 2 näher dargestellt.

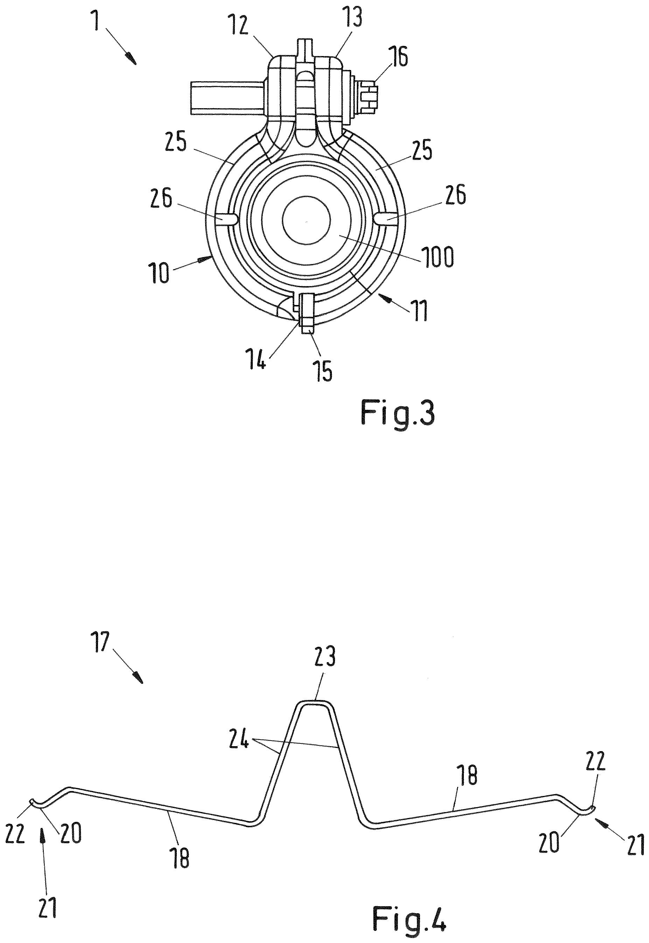

Figur 2 zeigt die Profilschelle 1 mit den Halbschalen 10, 11 und den Spannköpfen 12, 13, wobei die Spannköpfe 12, 13 noch nicht mit dem Spannelement 16 verspannt sind. Die Profilschelle 1 sitzt auf einem an einem Rohrende ausgebildeten Flansch 100 auf, in dem die endseitigen Verbindungsgeometrien 14, 15 der Halbschalen 10, 11 bereits miteinander verbunden sind. Den Schaft des Spannelementes 16 ist dabei durch die in der V-förmigen Ausformung 23 des Federelementes 17 ausgebildeten Öffnungen geführt. Durch einen Druckkontakt der Anlagebereiche 20, die sich in den Endbereichen 21 der Schenkel 18 des Federelementes 17 (siehe hierzu Figur 1) befinden, gegen eine Außenumfangsfläche des Flansches 100 wird in der in Figur 2 gezeigten Anordnung die Profilschelle 1 am Rohrende bzw. Flansch 100 reibschlüssig bzw. kraftschlüssig gehalten. Anschließend kann eine endgültige Befestigung der Profilschelle 1 durch ein Festziehen des Spannelementes 16 erfolgen, wie in Figur 3 gezeigt, ohne dass die Profilschelle ihre Position in Umfangsrichtung verändert.

Figur 3 stellt die Profilschelle 1 in einer geschlossenen Anordnung auf dem Flansch 100 dar, so dass die beiden Halbschalen 10, 11 mit miteinander verbundenen Verbindungsgeometrien 14 und 15 fest auf dem Rohrende bzw. Flansch 100 aufsitzen. Die feste Anordnung ergibt sich durch eine Verspannung der Spannköpfe 12, 13 mittels des Spannelementes 16, was zu einer Durchmesserverringerung der Profilschelle geführt hat, wodurch radiale und axiale Kräfte in die Rohrenden bzw. deren Flansche eingebracht werden.

Bei der gezeigten Profilschelle 1 sind in den seitlichen Profilwänden 25 der beiden Halbschalen 10, 11 Unterbrechungen 26 eingebracht, wodurch die Profilschelle 1 einfacher geöffnet und auf einen Verbindungsflansch aufgesetzt werden kann.

Figur 4 zeigt das Federelement 17 schematisch in einer Seitenansicht. Die V-förmige Ausformung 23 ist mittig zwischen den Schenkeln 18 angeordnet. Das Federelement 17 ist beispielsweise durch einen Blechstreifen gebildet und kann eine Krümmung aufweisen, die etwas geringer als die Krümmung der Halbschalen 10, 11 ist, so dass eine Vorspannung gewährleistet ist. In der V-förmigen Aussparung 23 sind Öffnungen eingebracht, die einen Durchgang 24 für das Spannelement bilden. Dabei ist die Größe der Öffnungen des Schraubendurchganges 24 so bemessen, dass das Spannelement etwas Spiel hat. Eine Relativbewegung zwischen dem Spannelement und dem Federelement 17 beziehungsweise der V-förmigen Ausführung 23 ist daher ermöglicht.

In den Endbereichen 21 der Schenkel 18 sind Anlagebereiche 20 ausgebildet. Die Endbereiche 21 verlaufen in einem Winkel zur Erstreckung der Schenkel 18 von beispielsweise 100° abgewinkelt. Die Anlagebereiche 20 sind an Umbiegungen 22 der Endbereiche ausgebildet, wodurch ein definierter Linienkontakt gegen die Außenseite des Flansches erreicht wird. Beim Spannen der Profilschelle legen sich die Schenkel 18 des Federelements dann mehr und mehr an die Rohrenden an. Ein vollständiges Spannen der Profilschelle wird durch das Federelement daher nicht gestört.

In einer bevorzugten Ausgestaltung kann vorgesehen sein, dass an den Rohrenden, insbesondere an deren Flanschen, außenseitig Aufnahmen ausgebildet sind, in die die Umbiegungen des Federelements eingreifen können. Zusätzlich zur reibschlüssigen Verbindung kann so eine formschlüssige Befestigung des Federelements bzw. der Profilschelle erfolgen.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Auch wenn in der vorliegenden Beschreibung von Rohrenden die Rede ist, schließt dies sämtliche Elemente der Rohrenden, insbesondere an den Rohrenden ausgebildete Flansche, mit ein.

### Bezugszeichenliste

- 100: Flansch

- 1: Profilschelle

- 10: Halbschale
- 11: Halbschale
- 12: Spannkopf
- 13: Spannkopf
- 14: Verbindungsgeometrie
- 15: Verbindungsgeometrie
- 16: Spannelement
- 17: Federelement
- 18: Schenkel
- 19: Innenseite
- 20: Anlagebereiche
- 21: Endbereiche
- 22: Umbiegung
- 23: V-förmige Ausformung
- 24: Durchgang
- 25: Profilwand
- 26: Unterbrechung

## Patentansprüche

1. Profilschelle (1) zum Verbinden zweier Rohrenden, die eine erste Halbschale (10) und eine zweite Halbschale (11) aufweist, wobei die erste und zweite Halbschale (10, 11) jeweils an einem ersten Ende einen Spannkopf (12, 13) und an einem zweiten Ende eine Verbindungsgeometrie (14, 15) zum lösbaren Verbinden der zweiten Enden aufweist, wobei die Spannköpfe (12, 13) mit einem Spannelement (16) verbunden sind, wobei wenigstens eine der beiden Halbschalen (11) gegenüber dem Spannelement (16) verkippbar ist, wobei ein Federelement (17) im Bereich der Spannköpfe (12, 13) angeordnet ist, das die zweiten Enden der Halbschalen (10, 11) unter Vorspannung auseinanderdrückt, wobei beim Verbinden der zweiten Enden Anlagebereiche (20) des Federelements (17) reibschlüssig an die Rohrenden anlegbar sind, wobei das Federelement (17) zwei Schenkel (18) aufweist, die an der jeweiligen Innenseite (19) der Halbschalen (10) und (11) anliegen, wobei zwischen den beiden Schenkeln (18) eine V-förmige Ausformung (23) ausgebildet ist, in der Öffnungen eingeformt sind, durch die sich das Spannelement (16) hindurch erstreckt, so dass das Federelement (17) am Spannelement (16) gehalten ist, **dadurch gekennzeichnet, dass** die Anlagebereiche (20) an abgewinkelten Endbereichen (21) der Schenkel (18) ausgebildet sind.

2. Profilschelle (1) nach Anspruch 1, **dadurch gekennzeichnet, dass** sich die Endbereiche (21) zu den Schenkeln (18) unter einem Winkel von 90° bis 180° und bevorzugt von 100° erstrecken.

3. Profilschelle (1) nach einem der vorhergehenden Ansprüche, **dadurch gekennzeichnet, dass** die Anlagebereiche (20) an einer Umbiegung (22) der Endbereiche ausgebildet sind.

4. Profilschelle (1) nach Anspruch 3, **dadurch gekennzeichnet, dass** die Umbiegungen (22) des Federelements (17) in Aufnahmen am Rohrende formschlüssig einbringbar sind.

5. Profilschelle (1) nach einem der vorgenannten Ansprüche, **dadurch gekennzeichnet, dass** wenigstens die Anlagebereiche (20) eine Beschichtung der Oberfläche aufweisen, mit der die Reibung zwischen den Anlagebereichen (20) und den Rohrenden (100) vergrößerbar ist.

6. Profilschelle (1) nach einem der vorgenannten Ansprüche, **dadurch gekennzeichnet, dass** das Federelement (17) aus einem Federstahlblech mittels Stanz-Biegeverfahren hergestellt ist.

7. Profilschelle (1) nach Anspruch 6, **dadurch gekennzeichnet, dass** das Federelement (17) eine Blechdicke von 0,2 mm bis 1 mm und bevorzugt von 0,4 mm aufweist.

## Claims

1. Profile clamp (1) for connection of two pipe ends, having a first half-shell (10) and a second half-shell (11), wherein the first and second half-shells (10, 11) each have a tensioning head (12, 13) at a first end and a connection geometry (14, 15) at a second end, which connection geometry serves for releasable connection of the second ends, wherein the tensioning heads (12, 13) are connected to a tensioning element (16), wherein at least one of the two half-shells (11) is tiltable relative to the tensioning element (16), wherein a spring element (17) is arranged in the region of the tensioning heads (12, 13), which spring element pushes the second ends of the half-shells (10, 11) apart under pretension, wherein, when the second ends are connected, abutment regions (20) of the spring element (17) are able to abut against the pipe ends in a frictionally engaging manner, wherein the spring element (17) has two limbs (18) which abut against the respective inner side (19) of the half-shells (10) and (11), wherein a V-shaped formation (23) is formed between the two limbs (18), in which V-shaped formation there are formed openings through which the tensioning element (16) extends such that the spring element (17) is held on the tensioning element (16), **characterized in that** the abutment regions (20) are formed on angled end regions (21) of the limbs (18).

2. Profile clamp (1) according to Claim 1, **characterized in that** the end regions (21) extend at an angle of 90° to 180°, and preferably of 100°, to the limbs (18).

3. Profile clamp (1) according to either of the preceding claims, **characterized in that** the abutment regions (20) are formed on a bent portion (22) of the end regions.

4. Profile clamp (1) according to Claim 3, **characterized in that** the bent portions (22) of the spring element (17) are able to be introduced in a form-fitting manner into receiving parts on the pipe end.

5. Profile clamp (1) according to one of the preceding claims, **characterized in that** at least the abutment regions (20) have a surface coating by way of which the friction between the abutment regions (20) and the pipe ends (100) is able to be increased.

6. Profile clamp (1) according to one of the preceding claims, **characterized in that** the spring element (17) is produced from a spring-steel sheet by means of a punching-and-bending process.

7. Profile clamp (1) according to Claim 6, **characterized in that** the spring element (17) has a sheet thickness of 0.2 mm to 1 mm, and preferably of 0.4 mm.

## Revendications

1. Collier profilé (1) pour relier deux extrémités de tube, qui présente une première demi-coque (10) et une deuxième demi-coque (11), la première et la deuxième demi-coque (10, 11) présentant chacune à une première extrémité une tête de serrage (12, 13) et à une deuxième extrémité une géométrie de liaison (14, 15) pour relier les deuxièmes extrémités de manière amovible, les têtes de serrage (12, 13) étant reliées à un élément de serrage (16), au moins l'une des deux demi-coques (11) pouvant être basculée par rapport à l'élément de serrage (16), un élément élastique (17) étant agencé dans la zone des têtes de serrage (12, 13), lequel écarte les deuxièmes extrémités des demi-coques (10, 11) sous précontrainte ; lors de la liaison des deuxièmes extrémités, des zones d'application (20) de l'élément élastique (17) pouvant être appliquées par friction contre les extrémités de tube, l'élément élastique (17) présentant deux branches (18) qui s'appliquent contre le côté intérieur respectif (19) des demi-coques (10) et (11), une conformation en forme de V (23) étant réalisée entre les deux branches (18), dans laquelle sont formées des ouvertures à travers lesquelles s'étend l'élément de serrage (16), de telle sorte que l'élément élastique (17) est maintenu sur l'élément de serrage (16), **caractérisé en ce que** les zones d'application (20) sont réalisées sur des zones d'extrémité coudées (21) des branches (18).

2. Collier profilé (1) selon la revendication 1, **caractérisé en ce que** les zones d'extrémité (21) s'étendent par rapport aux branches (18) selon un angle de 90° à 180° et de préférence de 100°.

3. Collier profilé (1) selon l'une quelconque des revendications précédentes, **caractérisé en ce que** les zones d'application (20) sont réalisées sur une courbure (22) des zones d'extrémité.

4. Collier profilé (1) selon la revendication 3, **caractérisé en ce que** les courbures (22) de l'élément élastique (17) peuvent être insérées par complémentarité de forme dans des logements à l'extrémité de tube.

5. Collier profilé (1) selon l'une quelconque des revendications précédentes, **caractérisé en ce qu'**au moins les zones d'application (20) présentent un revêtement de surface avec lequel le frottement entre les zones d'application (20) et les extrémités de tube (100) peut être augmenté.

6. Collier profilé (1) selon l'une quelconque des revendications précédentes, **caractérisé en ce que** l'élément élastique (17) est fabriqué à partir d'une tôle d'acier à ressort au moyen d'un procédé d'estampage et de pliage.

7. Collier profilé (1) selon la revendication 6, **caractérisé en ce que** l'élément élastique (17) présente une épaisseur de tôle de 0,2 mm à 1 mm et de préférence de 0,4 mm.
